# EUROPEAN PATENT APPLICATION

(11) **EP 2 853 418 A1**
(43) Date of publication of application: **01.04.2015**
(21) Application number: 13464013.5
(22) Date of filing: 30.09.2013
(51) Int. Cl.: B60C 11/24

(54) **System and method for determining a thickness of at tire wall**

(71) Applicant: Continental Automotive GmbH, 30165 Hannover (DE)
(72) Inventor: Ardelean, Darius Bogdan, Timisoara (RO)

(57) **Abstract**

A method for determining a thickness of at least one tire (1) of a vehicle (2) during an operation of the vehicle (2) is provided. The at least one tire (1) comprises a tire wall (3) having an inner side (4) and an outer side (5) opposite the inner side (4). The method comprises the steps of:
- transmitting a first beam (6) of ultrasonic waves having a first phase by an ultrasonic transmitter (7) arranged on the inner side (4), the first beam (6) of ultrasonic waves being transmitted through the tire wall (3),
- receiving a second beam (8) of ultrasonic waves having a second phase by an ultrasonic receiver (9) arranged on the inner side (4), the second beam (8) of ultrasonic waves being reflected through the tire wall (3) by a surface (10) arranged outside of the at least one tire (1),
- determining at least one parameter selected from a time period between transmitting the first beam (6) of ultrasonic waves and receiving the second beam (8) of ultrasonic waves and a phase shift between the first phase and the second phase,
- determining a thickness of the tire wall (3) of the at least one tire (1) based on the at least one determined parameter.

## Description

The present invention relates to a method for determining a thickness of at least one tire of a vehicle during an operation of the vehicle, a computer program product and a system for determining a thickness of at least one tire of a vehicle during an operation of the vehicle.

EP 0 972 658 B1 discloses a method for the determination of tread depth in a vehicle tire during travel, in which in an initializing phase the tires mounted on a vehicle are identified with respect to their relevant data, the tire form slip of the driven wheels is determined for certain driving conditions and corresponding to the currently existing driving conditions are evaluated using different weightings and from the evaluated tire form slip and a characteristic curve stored in the vehicle corresponding to the identified tire and taking account of the rubber mixture employed, the age of the tire, its dimensions and tread form, information on the present tread depth of the tire is given out.

An object of the present invention is to provide a method for determining a thickness of at least one tire of a vehicle during an operation of the vehicle, a computer program product and a system for determining a thickness of at least one tire of a vehicle during an operation of the vehicle which can be performed using fewer processing resources.

This object is solved by the subject matter of the independent claims. Further advantageous features are the subject matter of the dependent claims.

A method for determining a thickness of at least one tire of a vehicle during an operation of the vehicle is provided. The at least one tire comprises a tire wall having an inner side and an outer side opposite the inner side. The method comprises transmitting a first beam of ultrasonic waves having a first phase by an ultrasonic transmitter arranged on the inner side, wherein the first beam of ultrasonic waves is transmitted through the tire wall. The method further comprises receiving a second beam of ultrasonic waves having a second phase by an ultrasonic receiver arranged on the inner side, wherein the second beam of ultrasonic waves is reflected through the tire wall by a surface arranged outside of the at least one tire. Moreover, the method comprises determining at least one parameter selected from a time period between transmitting the first beam of ultrasonic waves and receiving the second beam of ultrasonic waves and a phase shift between the first phase and the second phase. The method further comprises determining a thickness of the tire wall of the at least one tire based on the at least one determined parameter.

According to the invention, the thickness of the tire wall of the at least one tire is determined based on the determined time period between transmitting the first beam of ultrasonic waves transmitted by the ultrasonic transmitter arranged on the inner side and receiving the second beam of ultrasonic waves received by the ultrasonic receiver arranged on the inner side and/or based on the determined phase shift between the first phase of the first beam of ultrasonic waves and the second phase of the second beam of ultrasonic waves. The thickness of the tire wall thus can be determined during an operation of the vehicle by evaluating data acquired by an ultrasonic sensor arranged on the inner side of the tire wall. This avoids the need of taking account of the rubber mixture employed, the age of the tire, its dimensions and tread form in order to gather information on the present thickness of the tire. Therefore, the method can be performed using fewer processing resources.

In an embodiment, the step of receiving the second beam of ultrasonic waves comprises receiving a beam of ultrasonic waves being reflected through the tire wall by a surface arranged in direct contact with the outer side. Thereby, the thickness of the tire wall can be determined with very high accuracy.

In a further embodiment, the step of receiving the second beam of ultrasonic waves comprises receiving a beam of ultrasonic waves being reflected through the tire wall by a road surface. This embodiment enables the thickness of the tire wall to be determined in a simple way and with very high accuracy.

The method may further comprise determining that the ultrasonic transmitter is arranged adjacent the surface. In this embodiment, the first beam of ultrasonic waves is transmitted whilst the ultrasonic transmitter is arranged adjacent the surface: This enables the accuracy of determining the thickness of the tire wall to be further increased.

The step of transmitting the first beam of ultrasonic waves may comprise transmitting a pulsed beam of ultrasonic waves whilst the ultrasonic transmitter is arranged adjacent the surface. Thereby, the processing resources required to carry out the method may be further reduced.

In a further embodiment, the steps of transmitting the first beam of ultrasonic waves and receiving the second beam of ultrasonic waves are performed repeatedly and the step of determining the at least one parameter comprises determining a plurality of values for the at least one parameter. In this embodiment, the method further comprises identifying a value of the plurality of determined values for the at least one parameter which is determined whilst the ultrasonic transmitter is arranged adjacent the surface. Thereby, the thickness of the tire wall can be determined with high accuracy, in particular when using a continuous beam of ultrasonic waves for the first beam of ultrasonic waves.

The step of identifying the value of the plurality of determined values for the at least one parameter which is determined whilst the ultrasonic transmitter is arranged adjacent the surface may comprise determining a minimum value of the plurality of determined values for the at least one parameter. This method is simple to perform.

The method may further comprise transmitting the determined thickness of the tire wall to at least one driver assistance system of the vehicle. In this embodiment, the determined thickness of the tire wall is thus provided to the at least one driver assistance system. Thereby, the operation of the driver assistance system can be adapted to the determined thickness. The at least one driver assistance system may be selected from the group consisting of an anti-lock braking system, an electronic stability control, which is also referred to as electronic stability program, and an emergency braking system.

In an embodiment, the method further comprises issuing a warning signal if the determined thickness of the tire wall is less than a first predetermined threshold value. Thereby, the passengers of the vehicle, in particular the driver of the vehicle, may be advised of a low thickness of the tire wall. Moreover, the warning signal may be transmitted to further vehicles by a vehicle-to-vehicle communication device.

The method may further comprise notifying a service unit if the determined thickness of the tire wall is less than a second predetermined threshold value. The second predetermined threshold value may be equal to or may be different from the first predetermined threshold value. By notifying a service unit, an appointment for exchanging the tire may be initiated automatically.

A computer program product is also provided that comprises code tangibly embodied thereon, that when executed on a processor, causes the processor to perform the method of one of the embodiments described above.

A system is also provided for determining a thickness of at least one tire of a vehicle during an operation of the vehicle. The at least one tire comprises a tire wall having an inner side and an outer side opposite the inner side. The system comprises at least one ultrasonic sensor mountable on the inner side. The at least one ultrasonic sensor comprises an ultrasonic transmitter for transmitting a first beam of ultrasonic waves having a first phase through the tire wall and an ultrasonic receiver for receiving a second beam of ultrasonic waves having a second phase reflected through the tire wall by a surface arranged outside of the at least one tire. The system further comprises first determining means for determining at least one parameter selected from a time period between transmitting the first beam of ultrasonic waves and receiving the second beam of ultrasonic waves and a phase shift between the first phase and the second phase. Moreover, the system comprises second determining means for determining a thickness of the tire wall of the at least one tire based on the at least one determined parameter.

In an embodiment, the system further comprises third determining means for determining that the ultrasonic transmitter is arranged adjacent the surface.

The third determining means may comprise at least one acceleration sensor. Thereby, determining that the ultrasonic transmitter is arranged adjacent the surface can be performed in a simple way.

In an embodiment, the system further comprises transmitting means for transmitting the determined thickness of the tire wall to at least one interface of the vehicle.

Embodiments will now be described with reference to the accompanying drawings.
- Figure 1: is a flowchart illustrating a method for determining a thickness of at least one tire of a vehicle during an operation of the vehicle according to a first embodiment.
- Figure 2: is a flowchart illustrating a method for determining a thickness of at least one tire of a vehicle during an operation of the vehicle according to a second embodiment.
- Figure 3A: illustrates a schematic diagram of a vehicle.
- Figure 3B: illustrates a schematic diagram of one of the wheels of the vehicle illustrated in Figure 3A.
- Figure 3C: illustrates a schematic enlargement of a section of Figure 3B.
- Figure 4: illustrates a schematic diagram of a system for determining a thickness of at least one tire of a vehicle during an operation of the vehicle according to an embodiment.

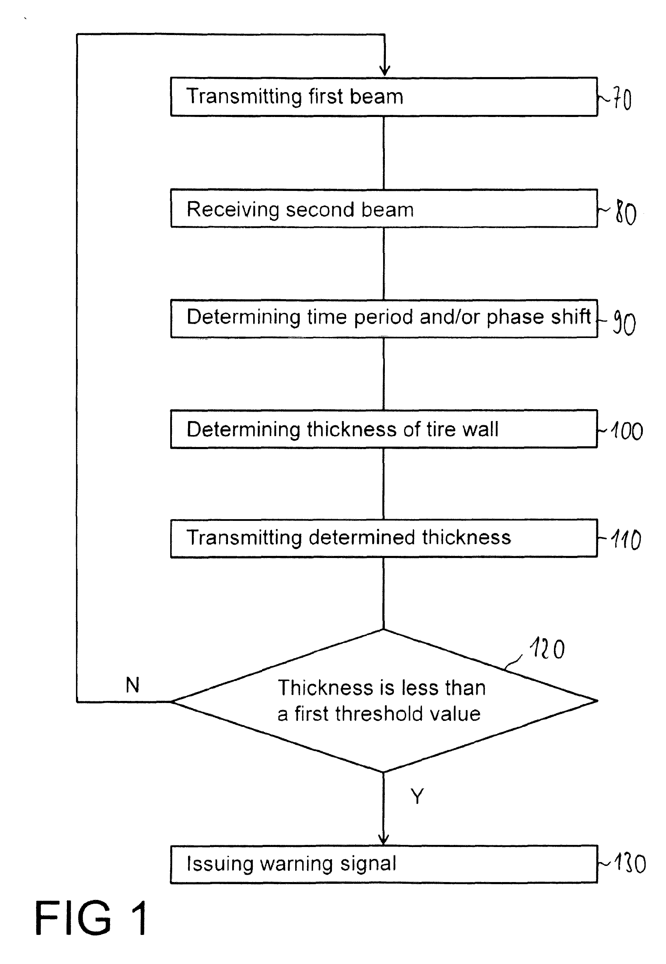

Figure 1 is a flowchart illustrating a method for determining a thickness of at least one pneumatic tire of a vehicle during an operation of the vehicle according to a first embodiment. The vehicle may be a motor vehicle, in particular a passenger car or a commercial road vehicle.

The at least one pneumatic tire comprises a tire wall having an inner side and an outer side opposite the inner side. Typically, the outer side of the tire wall provides a tread of the tire.

In step 70, during the operation of the vehicle, a first beam of ultrasonic waves having a first phase is transmitted by an ultrasonic transmitter arranged on the inner side. The ultrasonic transmitter is arranged on the inner side in such a way that the first beam of ultrasonic waves is transmitted through the tire wall. Moreover, in step 70, a time measurement may be triggered when the first beam of ultrasonic waves is transmitted.

In step 80, a second beam of ultrasonic waves having a second phase is received by an ultrasonic receiver arranged on the inner side. The second beam of ultrasonic waves is reflected through the tire wall by a surface arranged outside of the at least one tire. The ultrasonic receiver is arranged on the inner side in such a way that the second beam of ultrasonic waves reflected through the tire wall may be received and detected by the ultrasonic receiver. When the second beam of ultrasonic waves is received by the ultrasonic receiver, the time measurement which was started during step 70 is stopped.

In step 90, a time period between transmitting the first beam of ultrasonic waves and receiving the second beam of ultrasonic waves and/or a phase shift between the first phase and the second phase is determined. In the illustrated embodiment, the time period between transmitting the first beam of ultrasonic waves and receiving the second beam of ultrasonic waves is given by the value of the time measurement started during step 70 and stopped during step 80. The phase shift between the first phase and the second phase may be determined by determining the first phase of the first beam of ultrasonic waves, determining the second phase of the second beam of ultrasonic waves and determining a phase difference between the first phase and the second phase.

In step 100, a thickness of the tire wall of the at least one tire is determined based on the determined time period between transmitting the first beam of ultrasonic waves and receiving the second beam of ultrasonic waves and/or based on the determined phase shift between the first phase and the second phase. In the illustrated embodiment, the thickness of the tire wall may be determined by multiplying the determined time period by the speed of the ultrasonic waves and by dividing the result by two. Moreover, the thickness of the tire wall may be determined by multiplying the determined phase shift by half the wavelength of the ultrasonic waves and by dividing the result by 2·π.

In step 110, the determined thickness of the tire wall is transmitted to at least one driver assistance system of the vehicle. Thereby, the operation of the driver assistance system may be adapted to the determined thickness. The at least one driver assistance system may be selected from the group consisting of an anti-lock braking system, an electronic stability control, which is also referred to as electronic stability program, and an emergency braking system.

In step 120, the method further comprises determining if the determined thickness of the tire wall is less than a first predetermined threshold value. The first predetermined threshold value may be for example 5 mm.

If, in step 120, it is determined that the determined thickness of the tire wall is not less than the first predetermined threshold value, steps 70 to 120 are performed repeatedly.

If, however, in step 120, it is determined that the determined thickness of the tire wall is less than the first predetermined threshold value, a warning signal is issued in step 130. Issuing the warning signal may comprise issuing an acoustic and/or optic warning signal. Thereby, the passengers of the vehicle, in particular the driver of the vehicle, may be advised of a low thickness of the tire wall. Moreover, the warning signal may be transmitted to further vehicles by a vehicle-to-vehicle communication device.

The method may further comprise determining if the determined thickness of the tire wall is less than a second predetermined threshold value, for example 4 mm, and a service unit may be notified automatically, if the determined thickness of the tire wall is less than the second predetermined threshold value.

If the steps of transmitting the first beam of ultrasonic waves and receiving the second beam of ultrasonic waves are performed repeatedly, a plurality of time periods and/or a plurality of phase shifts may be determined. In particular, a plurality of time periods and/or phase shifts may be determined, if the first beam of ultrasonic waves is a continuous beam transmitted during at least one revolution of the pneumatic tire. The method then further comprises identifying a time period of the plurality of determined time periods and/or identifying a phase shift of the plurality of determined phase shifts which is determined whilst the ultrasonic transmitter is arranged adjacent the surface, for example by determining a minimum value of the plurality of determined time periods and/or by determining a minimum value of the plurality of determined phase shifts.

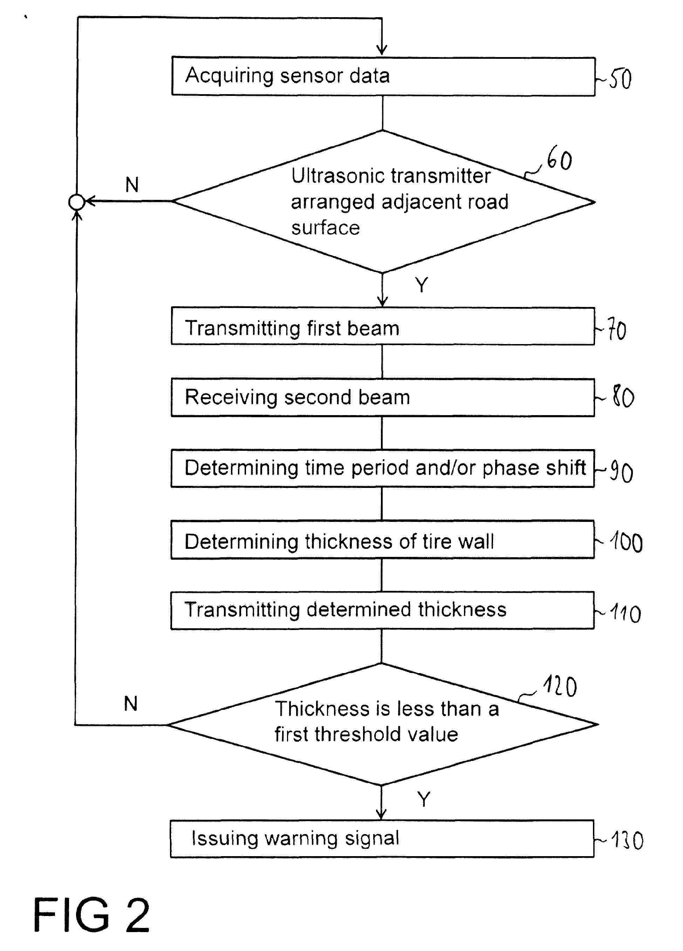

Figure 2 is a flowchart illustrating a method for determining a thickness of at least one pneumatic tire of a vehicle during an operation of the vehicle according to a second embodiment. The vehicle may be a motor vehicle, in particular a passenger car or a commercial road vehicle.

The at least one pneumatic tire comprises a tire wall having an inner side and an outer side opposite the inner side. Typically, the outer side of the tire wall provides a tread of the tire. An ultrasonic sensor comprising an ultrasonic transmitter and an ultrasonic receiver is mounted on the inner side.

In step 50, during the operation of the vehicle, sensor data is acquired in order to determine if the ultrasonic transmitter is arranged adjacent an actual contact patch of the at least one pneumatic tire, i.e. the portion of the tread of the at least one pneumatic tire that is in actual contact with a road surface on which the vehicle travels. The contact patch is also referred to as footprint of the at least one pneumatic tire. In the illustrated embodiment, in order to determine if the ultrasonic transmitter is arranged adjacent the contact patch, sensor data acquired by at least one acceleration sensor which is arranged on the inner side is used.

Based on the sensor data acquired in step 50, it is determined in step 60, if the ultrasonic transmitter is arranged adjacent the actual contact patch and thus if the ultrasonic transmitter is arranged adjacent the road surface which is in contact with the contact patch.

If, in step 60, it is determined that the ultrasonic transmitter is not arranged adjacent the road surface, the steps 50 and 60 are performed repeatedly.

If, however, in step 60, it is determined that the ultrasonic transmitter is arranged adjacent the road surface, a first beam of ultrasonic waves having a first phase is transmitted by the ultrasonic transmitter in step 70. The ultrasonic transmitter is arranged on the inner side in such a way that the first beam of ultrasonic waves is transmitted through the tire wall. In the illustrated embodiment, a pulsed beam of ultrasonic waves is transmitted in step 70. Moreover, in step 70, a time measurement may be triggered when the first beam of ultrasonic waves is transmitted.

In step 80, a second beam of ultrasonic waves having a second phase is received by the ultrasonic receiver. The second beam of ultrasonic waves is reflected through the tire wall by the road surface arranged outside of the at least one tire. The ultrasonic receiver is arranged on the inner side in such a way that the second beam of ultrasonic waves reflected through the tire wall may be received and detected by the ultrasonic receiver. In the illustrated embodiment, the second beam of ultrasonic waves is also a pulsed beam of ultrasonic waves. When the second beam of ultrasonic waves is received by the ultrasonic receiver, the time measurement which was started during step 70 is stopped.

In step 90, a time period between transmitting the first pulsed beam of ultrasonic waves and receiving the second pulsed beam of ultrasonic waves and/or a phase shift between the first phase and the second phase is determined. In the illustrated embodiment, the time period between transmitting the first pulsed beam of ultrasonic waves and receiving the second pulsed beam of ultrasonic waves is given by the value of the time measurement started during step 70 and stopped during step 80. The phase shift between the first phase and the second phase may be determined by determining the first phase of the first beam of ultrasonic waves, determining the second phase of the second beam of ultrasonic waves and determining a phase difference between the first phase and the second phase.

In step 100, a thickness of the tire wall of the at least one tire is determined based on the determined time period between transmitting the first pulsed beam of ultrasonic waves and receiving the second pulsed beam of ultrasonic waves and/or based on the determined phase shift between the first phase and the second phase. In the illustrated embodiment, the thickness of the tire wall may be determined by multiplying the determined time period by the speed of the ultrasonic waves and by dividing the result by two. Moreover, the thickness of the tire wall may be determined by multiplying the determined phase shift by half the wavelength of the ultrasonic waves and by dividing the result by 2·π.

In step 110, the determined thickness of the tire wall is transmitted to at least one driver assistance system of the vehicle. Step 110 of the second embodiment corresponds to step 110 of the first embodiment illustrated in Figure 1.

In step 120, the method further comprises determining if the determined thickness of the tire wall is less than a first predetermined threshold value. The first predetermined threshold value may be for example 5 mm.

If, in step 120, it is determined that the determined thickness of the tire wall is not less than the first predetermined threshold value, steps 70 to 120 are performed repeatedly.

If, however, in step 120, it is determined that the determined thickness of the tire wall is less than the first predetermined threshold value, a warning signal is issued in step 130. Step 130 of the second embodiment corresponds to step 130 of the first embodiment illustrated in Figure 1.

The illustrated embodiments thereby enable an automatic tire worn-out detection and driver information about the tire usage status and tire remaining life time based on ultrasonic waves by measuring a distance from an ultrasonic transducer to the road surface, having the tire rubber between. An electronic wireless module comprising the ultrasonic transducer mounted in the inner side of the tire, for example vulcanized in the inner side of the tire, and oriented to the exterior of the tire rolling way, is used in order to transmit the ultrasonic wave in the ground direction when the ultrasonic transducer reaches the lower position on the wheel while spinning. The transducer will send an ultrasonic wave and the reflected wave in different material will be analyzed, taking into account that the final material by which the ultrasonic wave is reflected is the road asphalt material. In this way, the distance from the ultrasonic transducer to the road asphalt is given by the tire width, i.e. the thickness of the tire wall, and the tire width can be calculated or estimated. The tire usage and tire remaining life time may be calculated by measuring the feedback from the ultrasonic transducer mounted on the tire rolling way. The information may be sent via radio frequency to a car receiver. The driver of the car may be informed and can replace the obsolete tire. The ultrasonic transducer may be mounted on a printed circuit board of the wireless module and process the aforementioned data.

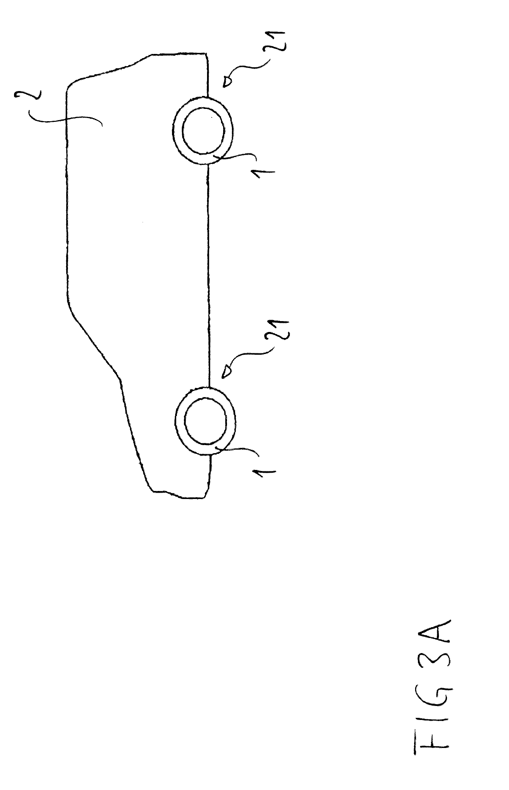

Figure 3A illustrates a schematic diagram of a vehicle 2.

In the illustrated embodiment, the vehicle 2 is a passenger car. The vehicle 2 comprises four wheels 21, of which a front wheel and a rear wheel are illustrated in Figure 3A. The wheels 21 each comprise a pneumatic tire 1. Further details are explained in connection with the following figures.

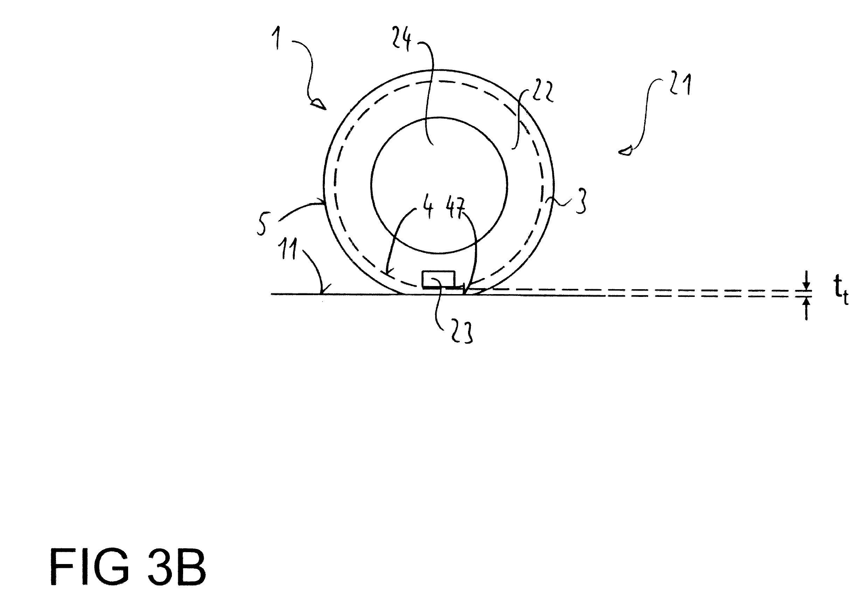

Figure 3B illustrates a schematic enlarged diagram of one of the wheels 21 of the vehicle illustrated in Figure 3A. Components with the same function as in Figure 3A are designated with the same reference signs and are not explained again in the following.

As illustrated in Figure 3B, the pneumatic tire 1 of the wheel 21 comprises a tire wall 3. The tire wall 3 has an inner side 4 and an outer side 5 opposite the inner side 4. The inner side 4 is illustrated schematically by a dashed line and the outer side 5 is illustrated schematically by a continuous line in Figure 3B. The outer side 5 provides a tread of the pneumatic tire 1. Moreover, the pneumatic tire 1 comprises a sidewall 22. The pneumatic tire 1 is mounted on a rim 24 of the wheel 21.

A tire module 23 is mounted on the inner side 4 of the tire wall 3. For example, the tire module 23 is vulcanized on the inner side 4. As explained in more detail below, a thickness tₜ of the tire wall 3 may be determined by the tire module 23, when the tire module 23 is arranged adjacent a road surface 11 on which the pneumatic tire 1 travels, i.e. when the tire module 23 is arranged adjacent an actual contact patch 47 of the pneumatic tire 1.

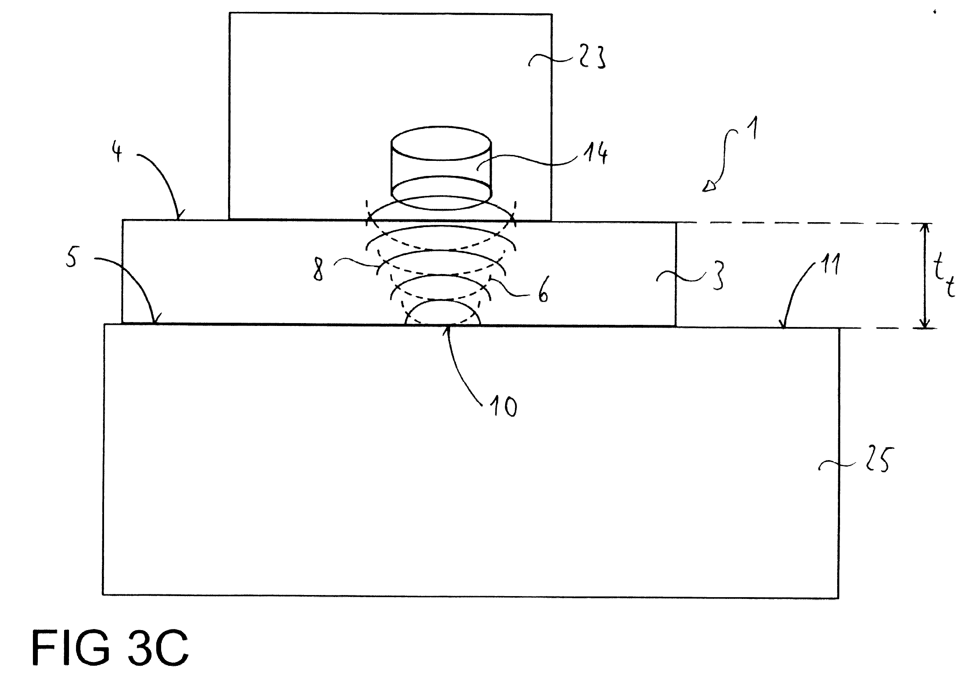

Figure 3C illustrates a schematic enlargement of a section of Figure 3B. Components with the same function as in Figure 3B are designated with the same reference signs and are not explained again in the following.

As illustrated in Figure 3C, the tire module 23 comprises an ultrasonic sensor 14. The ultrasonic sensor 14 comprises an ultrasonic transmitter for transmitting a first beam 6 of ultrasonic waves having a first phase through the tire wall 3. Moreover, the ultrasonic sensor 14 comprises an ultrasonic receiver for receiving a second beam 8 of ultrasonic waves reflected through the tire wall 3 by a surface 10 arranged outside of the tire 1 and for determining a phase of the second beam 8 of ultrasonic waves. The first beam 6 of ultrasonic waves is illustrated schematically by a dashed line and the second beam 8 of ultrasonic waves is illustrated schematically by a continuous line in Figure 3C. For reasons of clarity, the ultrasonic transmitter and the ultrasonic receiver of the ultrasonic sensor 14 are not illustrated in detail in Figure 3C. The surface 10 is provided by a road surface 11 of a road 25 on which the vehicle comprising the tire is travelling.

A reflection of the first beam 6 of ultrasonic waves by the surface 10 occurs due to a difference between the density of the material of the tire wall 3 which typically is rubber and the density of the material of the road 25 which for example may be concrete or asphalt. The reflected second beam 8 of ultrasonic waves has a second phase which, compared to the first phase of the first beam 6 of ultrasonic waves, is shifted by a phase shift. The time period between transmitting the first beam 6 of ultrasonic waves by the ultrasonic transmitter and receiving the second beam 8 of ultrasonic waves by the ultrasonic receiver as well as the value of the phase shift between the first beam 6 of ultrasonic waves and the second beam 8 of ultrasonic waves depend on the distance between the ultrasonic sensor 14 and the surface 10. Thus, the thickness tₜ of the tire wall 3 may be determined based on the time period between transmitting the first beam 6 of ultrasonic waves and receiving the second beam 8 of ultrasonic waves and/or based on the phase shift between the first phase and the second phase, wherein a distance between the ultrasonic sensor 14 and the inner side 4 may additionally be taken into account.

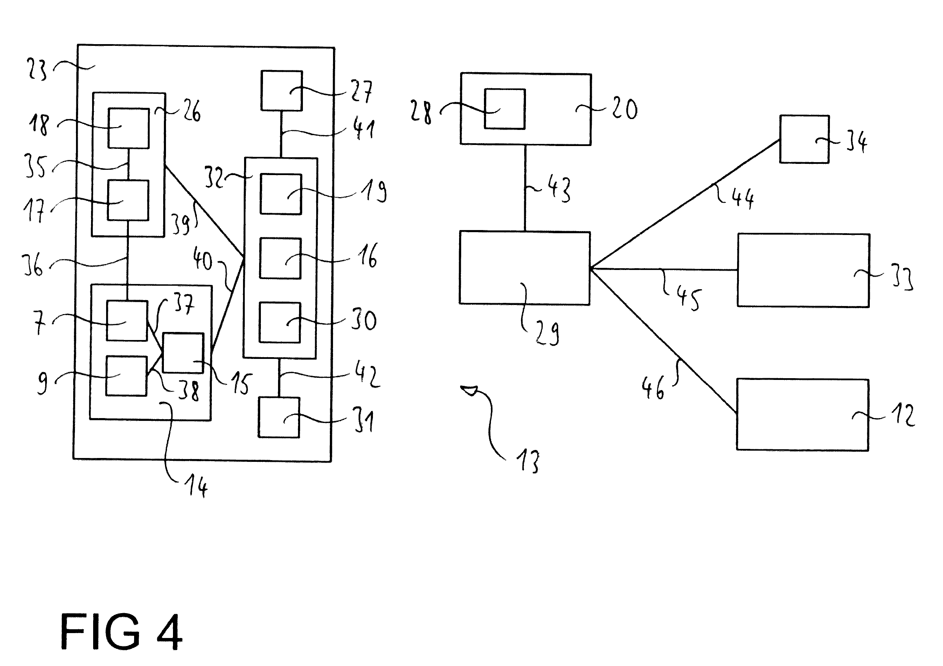

Figure 4 illustrates a schematic diagram of a system 13 for determining a thickness of at least one tire of a vehicle during an operation of the vehicle according to an embodiment. Components with the same function as in Figures 3A to 3C are designated with the same reference signs and are not explained again in the following. For reasons of clarity, the vehicle is not illustrated in detail in Figure 4.

The system 13 comprises at least one tire module 23. Typically, the system 13 comprises one tire module 23 for each of the tires of the vehicle. For reasons of clarity, only one tire module 23 is illustrated in detail in Figure 4.

The tire module 23 is mountable on the inner side of the respective tire and comprises an ultrasonic sensor 14. The ultrasonic sensor 14 comprises an ultrasonic transmitter 7 for transmitting a first beam of ultrasonic waves at a frequency of for example 20 kHz through the tire wall and an ultrasonic receiver 9 for receiving a second beam of ultrasonic waves at the same frequency reflected through the tire wall by a surface arranged outside of the respective tire. Moreover, in the illustrated embodiment, the ultrasonic receiver 9 is configured to determine a phase of the second beam of ultrasonic waves. A frequency of about 20 kHz is very suitable, since the ultrasonic reflectivity of typical road materials, for example concrete or asphalt, is very high for said frequency range.

The tire module 23 further comprises first determining means 15 configured to determine a time period between transmitting the first beam of ultrasonic waves and receiving the second beam of ultrasonic waves and/or configured to determine a phase shift between the first beam of ultrasonic waves and the second beam of ultrasonic waves. In the illustrated embodiment, the first determining means 15 is provided within the ultrasonic sensor 14 and is connected to the ultrasonic transmitter 7 by a signal line 37 and to the ultrasonic receiver 9 by a signal line 38.

The tire module 23 further comprises second determining means 16 configured to determine a thickness of the tire wall of the respective tire based on the determined time period between transmitting the first beam of ultrasonic waves and receiving the second beam of ultrasonic waves and/or based on the determined phase shift between the first beam of ultrasonic waves and the second beam of ultrasonic waves. The second determining means 16 is provided within a processing unit 32 of the tire module 23.

In the illustrated embodiment, the tire module 23 further comprises third determining means 17 configured to determine that the ultrasonic transmitter 7 is arranged adjacent the surface outside of the respective tire. The third determining means 17 is provided within a sensor unit 26 which comprises an acceleration sensor 18 connected to the third determining means 17 by a signal line 35. The acceleration sensor 18 may detect vibrations which occur when the tire module 23 is arranged adjacent the actual contact surface of the respective tire. The third determining means 17 may determine that the ultrasonic transmitter 7 is arranged adjacent the surface outside of the respective tire if the acceleration determined by the acceleration sensor 18 is higher than a predetermined threshold value. If this is the case, the third determining means 17 may trigger a transmission of a pulsed beam of ultrasonic waves by the ultrasonic transmitter 7. For this purpose, the third determining means 17 is connected to the ultrasonic transmitter 7 by a signal line 36.

In the illustrated embodiment, the tire module 23 further comprises a pressure sensor 27 for determining a pressure of the pneumatic tire and a temperature sensor 31 for determining a temperature of the respective pneumatic tire. The pressure sensor 27 is connected to the processing unit 32 by a signal line 41 and the temperature sensor 31 is connected to the processing unit 32 by a signal line 42. Moreover, the sensor unit 26 is connected to the processing unit 32 by a signal line 39 and the ultrasonic sensor 14 is connected to the processing unit 32 by a signal line 40.

The processing unit 32 further comprises a battery 30 providing power to the aforementioned components of the tire module 23 and transmitting means 19 configured to wirelessly transmit the determined thickness of the tire wall as well as the determined pressure and the determined temperature of the pneumatic tire to at least one interface 20 of the vehicle. The interface 20 comprises receiving means 28 configured to wirelessly receive the aforementioned data.

The determined thickness of the tire wall of the respective tire as well as the determined pressure and the determined temperature of the pneumatic tire may be provided to a control unit 29 of the vehicle connected to the interface 20 by a signal line 43.

In the illustrated embodiment, the control unit 29 transmits the determined thickness of the tire wall of the respective tire via a signal line 46 to at least one driver assistance system 12 of the vehicle. The at least one driver assistance system 12 may be selected from the group consisting of an anti-lock braking system, an electronic stability control, which is also referred to as electronic stability program, and an emergency braking system.

Moreover, the control unit 29 determines if the determined thickness of the tire wall is less than a first predetermined threshold value. The first predetermined threshold value may be for example 5 mm. If the control unit 29 determines that the determined thickness of the tire wall is less than the first predetermined threshold value, a warning signal is issued by an output device 33 connected to the control unit 29 by a signal line 45. The output device 33 may issue an acoustic and/or optic warning signal. Moreover, the warning signal may be transmitted to further vehicles by a communication unit 34 connected to the control unit 29 by a signal line 44 and comprising a vehicle-to-vehicle communication device.

In the illustrated embodiment, the control unit 29 further determines if the determined thickness of the tire wall is less than a second predetermined threshold value, for example 4 mm. If the control unit 29 determines that the determined thickness of the tire wall is less than the second predetermined threshold value, a service unit may be notified automatically by the communication unit 34.

### List of reference signs

- 1: tire
- 2: vehicle
- 3: tire wall
- 4: inner side
- 5: outer side
- 6: first beam
- 7: ultrasonic transmitter
- 8: second beam
- 9: ultrasonic receiver
- 10: surface
- 11: road surface
- 12: driver assistance system
- 13: system
- 14: ultrasonic sensor
- 15: first determining means
- 16: second determining means
- 17: third determining means
- 18: acceleration sensor
- 19: transmitting means
- 20: interface
- 21: wheel
- 22: sidewall
- 23: tire module
- 24: rim
- 25: road
- 26: sensor unit
- 27: pressure sensor
- 28: receiving means
- 29: control unit
- 30: battery
- 31: temperature sensor
- 32: processing unit
- 33: output device
- 34: communication unit
- 35: signal line
- 36: signal line
- 37: signal line
- 38: signal line
- 39: signal line
- 40: signal line
- 41: signal line
- 42: signal line
- 43: signal line
- 44: signal line
- 45: signal line
- 46: signal line
- 47: contact patch
- 50: step
- 60: step
- 70: step
- 80: step
- 90: step
- 100: step
- 110: step
- 120: step
- 130: step

- tₜ: thickness

## Claims

1. A method for determining a thickness of at least one tire (1) of a vehicle (2) during an operation of the vehicle (2), the at least one tire (1) comprising a tire wall (3) having an inner side (4) and an outer side (5) opposite the inner side (4), comprising the steps of:
- transmitting a first beam (6) of ultrasonic waves having a first phase by an ultrasonic transmitter (7) arranged on the inner side (4), the first beam (6) of ultrasonic waves being transmitted through the tire wall (3),
- receiving a second beam (8) of ultrasonic waves having a second phase by an ultrasonic receiver (9) arranged on the inner side (4), the second beam (8) of ultrasonic waves being reflected through the tire wall (3) by a surface (10) arranged outside of the at least one tire (1),
- determining at least one parameter selected from a time period between transmitting the first beam (6) of ultrasonic waves and receiving the second beam (8) of ultrasonic waves and a phase shift between the first phase and the second phase,
- determining a thickness of the tire wall (3) of the at least one tire (1) based on the at least one determined parameter.

2. The method according to claim 1, wherein the step of receiving the second beam (8) of ultrasonic waves comprises receiving a beam of ultrasonic waves being reflected through the tire wall (3) by a surface arranged in direct contact with the outer side (5).

3. The method according to claim 1 or claim 2, wherein the step of receiving the second beam (8) of ultrasonic waves comprises receiving a beam of ultrasonic waves being reflected through the tire wall (3) by a road surface (11) .

4. The method according to one of claims 1 to 3, wherein the method further comprises determining that the ultrasonic transmitter (7) is arranged adjacent the surface (10) and wherein the first beam (6) of ultrasonic waves is transmitted whilst the ultrasonic transmitter (7) is arranged adjacent the surface (10).

5. The method according to claim 4, wherein the step of transmitting the first beam (6) of ultrasonic waves comprises transmitting a pulsed beam of ultrasonic waves whilst the ultrasonic transmitter (7) is arranged adjacent the surface (10).

6. The method according to one of claims 1 to 3, wherein the steps of transmitting the first beam (6) of ultrasonic waves and receiving the second beam (8) of ultrasonic waves are performed repeatedly and wherein the step of determining the at least one parameter comprises determining a plurality of values for the at least one parameter and wherein the method further comprises identifying a value of the plurality of determined values for the at least one parameter being determined whilst the ultrasonic transmitter (7) is arranged adjacent the surface (10).

7. The method according to claim 6, wherein the step of identifying the value of the plurality of determined values for the at least one parameter being determined whilst the ultrasonic transmitter (7) is arranged adjacent the surface (10) comprises determining a minimum value of the plurality of determined values for the at least one parameter.

8. The method according to one of claims 1 to 7, further comprising transmitting the determined thickness of the tire wall (3) to at least one driver assistance system (12) of the vehicle (2).

9. The method according to one of claims 1 to 8, further comprising issuing a warning signal if the determined thickness of the tire wall (3) is less than a first predetermined threshold value.

10. The method according to one of claims 1 to 9, further comprising notifying a service unit if the determined thickness of the tire wall (3) is less than a second predetermined threshold value.

11. A computer program product, comprising code tangibly embodied thereon, that when executed on a processor, causes the processor to perform a method according to one of claims 1 to 10.

12. A system (13) for determining a thickness of at least one tire (1) of a vehicle (2) during an operation of the vehicle (2), the at least one tire (1) comprising a tire wall (3) having an inner side (4) and an outer side (5) opposite the inner side (4), the system (13) comprising
- at least one ultrasonic sensor (14) mountable on the inner side (4), wherein the at least one ultrasonic sensor (14) comprises an ultrasonic transmitter (7) for transmitting a first beam (6) of ultrasonic waves having a first phase through the tire wall (3) and an ultrasonic receiver (9) for receiving a second beam (8) of ultrasonic waves having a second phase reflected through the tire wall (3) by a surface (10) arranged outside of the at least one tire (1),
- first determining means (15) for determining at least one parameter selected from a time period between transmitting the first beam (6) of ultrasonic waves and receiving the second beam (8) of ultrasonic waves and a phase shift between the first phase and the second phase,
- second determining means (16) for determining a thickness of the tire wall (3) of the at least one tire (1) based on the at least one determined parameter.

13. The system according to claim 12, further comprising third determining means (17) for determining that the ultrasonic transmitter (7) is arranged adjacent the surface (10).

14. The system according to claim 13, wherein the third determining means (17) comprises at least one acceleration sensor (18).

15. The system according to one of claims 12 to 14, further comprising transmitting means (19) for transmitting the determined thickness of the tire wall (3) to at least one interface (20) of the vehicle (2).
